# EUROPEAN PATENT SPECIFICATION

(11) **EP 0 564 418 B1**
(45) Date of publication and mention of the grant of the patent: **27.12.1996**
(21) Application number: 93830119.9
(22) Date of filing: 25.03.1993
(51) Int. Cl.: G01L 9/00

(54) **Electronic differential pressure switch with commutator and for several calibration values**
Elektronischer differentieller Druckschalter mit einem Schalter für einige Eichwerte
Commutateur électronique à pression différentielle avec commutateur pour plusieurs valeurs d'étalonnage

(30) Priority: 31.03.1992 IT AN920008
(43) Date of publication of application: 06.10.1993
(73) Proprietor: L.N. di NATALINI LINO & C. - S.r.l., I-62010 Montecassiano (MC) (IT)
(72) Inventor: Natalini, Lino, Macerata (IT); Olmi, Walter, Recanati (MC) (IT)
(74) Representative: Baldi, Claudio

(56) References cited:
- FR-A- 2 464 468
- US-A- 3 922 909
- US-A- 4 464 936
- US-A- 5 005 584
- PATENT ABSTRACTS OF JAPAN vol. 9, no. 207 (P-382)(1930) 24 August 1985 & JP-A-60 70 324 ( MATSISHITA DENKI SANGYO K.K.) 22 April 1985.

## Description

This patent application for an industrial invention concerns an electronic differential pressure switch on which it is possible to simultaneously set more than one calibration value.

As is known, in heating and conditioning plants in general it is necessary to use control devices to guarantee that the anticipated air or smoke flow, in the suction or discharge conduits, is maintained within the pre-established values.

The presence of said control devices above all guarantees safety in the functioning of the plants and secondly greater efficiency in performance terms, while moreover, protecting the environment from superfluous pollution.

In order to detect the flow of gas inside a conduit various methods can be adopted; one of the most common for reasons of simplicity, economy and reliability, entails the use of a Venturi tube (or similar) installed within the conduit, and connected to a differential membrane pressure switch.

The flow of gas which goes through the Venturi tube produces such a difference in pressure as to maintain the pressure switch in working condition, thereby activating, by means of electric contacts, the circuits connected to it.

Should there be any irregularities in the plant, the difference in pressure varies in such a way as to no longer be able to maintain the previous condition; therefore the membrane of the pressure switch returns to its resting position and disactivates the electric circuits, carrying out a safety blocking action in the plant.

Currently almost all available pressure switches, intended for use as above, are manufactured using a fairly uniform construction technique.

They are made up essentially of two rigid half-shells in metal or plastic, within which an intermediate elastic membrane is clamped and enclosed, which hermetically separates two adjacent airtight chambers.

Said membrane can act in a mechanical manner on a pair of electric contacts positioned in one of the aforementioned chambers and is kept in its resting position by a return spring, the thrust force of which is set by means of a register screw to which access can be gained from the outside.

Each half-shell is fitted with a connecting tube which links the related airtight chamber to the exterior. So far, the difference in pressure between the two chambers will not be sufficient to overcome the force of the return spring, the electric contacts will stay at rest, while they activate the circuits connected to them for as long as the pressure values are maintained above the pre-established calibration.

However, this type of differential pressure switch cannot be used in situations when the plant requires sensitivity to low pressure values; in fact, the force necessary to manoeuvre the electric contacts, which must be exercised by the membrane and consequently by the gas pressure itself, prevents the instruments from being set at very low values.

This limitation has been surmounted by the advent of electronic differential pressure switches, which are essentially identical to the abovementioned pressure switches as far as construction is concerned but not in method of functioning.

In fact, they too envisage the use of a flexible membrane positioned between two adjacent airtight chambers and set in motion as a result of the difference in pressure between the two chambers.

The resting position of this membrane is guaranteed moreover, by the presence of an antagonistic spring,the calibration of which is variable, by means of an adjusting screw to which access can be gained from the outside of the instrument.

However, in this electronic pressure switch, the flexible membrane does not intervene on a mechanically activated electric switch, consequently, the only resisting force which it must overcome is supplied by the antagonistic spring.

A solid opaque body is applied to the membrane of said pressure switch, which on one side, is fixed to the membrane, while on the other side it rests against the antagonistic spring; movement of the membrane causes a displacement of said body, which from now on, will be called optic barrier,in a direction perpendicular to the membrane itself.

Perpendicular to the direction in which said barrier is displaced, there are positioned an infra-red photo-emitter and a corresponding photo-detector.

In resting conditions, the membrane keeps the barrier in such a position as to totally intercept the beam of radiations.

As a result of a certain difference in pressure, the function of the calibration of the antagonistic spring,the membrane is able to overcome the opposing resisting force of the antagonistic spring and displace the barrier in such a way as to enable the optic beam to strike the photo-detector, which emits as a consequence, an electric signal which activates an electromechanic relay in which the switching contacts carry out the function required of the pressure switch.

In this type of electronic pressure switch, the relay functions at only one pre-established pressure value on the membrane; said pressure switches are decidedly rather more sensitive than their counterparts previously described, and can be calibrated at very low values, due to the absence of friction and resisting forces.

In some types of plant, particularly heating plants, very often even more sophisticated functions are required of the pressure switches, like for example, the possibility of varying at will, the value of the calibration in two or more pre-established trips, and even, in a manner proportional to an external control signal.

These requirements, dictated by the need to optimize the combustion of modern gas burners in their varied working conditions and to make plants safer, are difficult to satisfy with electronic pressure switches of the type just described, since they can be calibrated at one pressure value only; where it is necessary to detect multiple values, a different pressure switch must be associated with each value, with obvious complications in plant enginering and higher costs resulting from this.

The aim of the present invention is to create an electronic differential pressure switch which can be calibrated on two pressure values, which may be selected on each occasion by means of an electric switching signal.

As will emerge from the description which follows, the pressure switch according to the invention, even offers the possibility of varying its calibration value in proportion to an external control signal, after installation.

The present invention consists in the use of a photo-detector, intended to receive the radiation beams emitted by a pair of photo-emitters, positioned side by side and opposite the photo-detector, these being activated by means of electronic circuits which permit a variation in the respective feed currents, in an inversely proportional manner.

It is obvious that upon variation of the currents which feed the two photo-emitters, the luminous emission which strikes the photo-detector will also vary; therefore it is as it the iuminous emission came from a source of virtual light, positioned between the two actual photo-emitters. Thus it is possible to create numerous intermediate situations between the two extreme cases, which correspond to the total blanking of one or the other luminous sources.

Moreover, it is evident that for each situation there will be a trip on the relay to a different pressure value, between the two extremes corresponding to the two cases indicated above.

In order for said intermediate situations to take place, it is necessary that both the photo-emitters contribute,even at different levels quantitively speaking, to the formation of the luminous beam which strikes the photo-detector; to ensure that this condition be satisfied it is necessary that during the partial and progressive detection, by the optical barrier in retreat, of the radiation emitted by the first photo-emitter, the start and the gradual detection of the radiation emitted by the second photo-emitter, should also take place.

This method of functioning can be realised by means of the suitable shape and positioning of the optical barrier with respect to the optical receiver-transmitter group, as will be subsequently specified.

Said pressure switch can work at two pre-established calibration values which can be switch controlled: the first, pre-set in a conventional manner, controls the force of the antagonistic spring, the second, pre-set in a new and original manner, varies the feed current of the two luminous sources.

For further clarity of explanation, the description of the invention continues with reference to the attached drawings, reproduced for illustrative and not limitative purposes, wherein:
- Fig. 1 is a schematic reproduction of the components of the electronic differential pressure switch, according to the invention;
- Fig. 2 shows the optic barrier seen from a direction orthogonal to the direction in which it moves following the elastic deformations of the membrane;
- Fig. 3 shows the electric diagram of the beginning of the circuit in which the photo-emitters are connected.

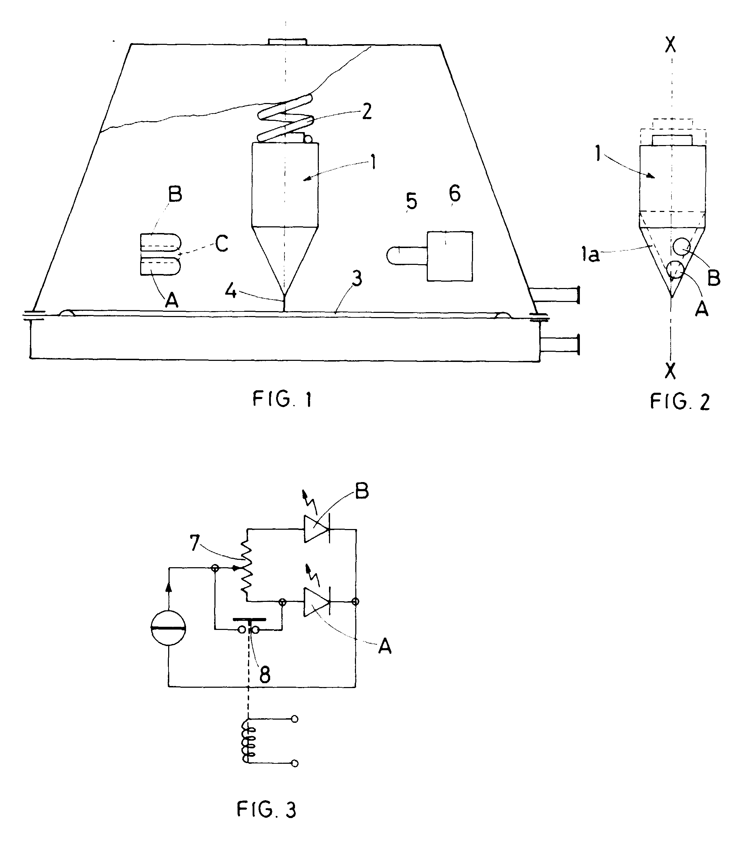

In Fig.1, the number (1) indicates the optic barrier, subject to the thrust of an antagonistic spring (2) and fixed to the membrane (3) by means of a stem (4), perpendicular to the membrane (3) but on a line with the longitudinal axis of the optic barrier (1). The number (5) indicates the photo-detector with the related miniaturized electronic circuit (6), due to the discrimination of the number of radiations received from the photo-detector (5).

The letters (A) and (B) indicate two photo-emitters. It is specified that said optic barrier consists of a cylindrical opaque body, ending in a conical tip (1a), which intercepts, while in its resting position, the luminous radiations emitted by the pair of photo-emitters (A) and (B), which are positioned, together with the photo-receiver (5), on a plane not passing through the longitudinal axis X-X of the conical tip (1a), as illustrated in Fig.2.

This positioning of the optical receiver-transmitter group with respect to the optic barrier ensures that the gradual detection of radiation from the photo-emitter (B) during the retreat of the barrier starts before radiation from the photo-emitter (A) has been completely detected, in such a way as to provide the condition, already underlined above, in which both the luminous sources (A and B) contribute to the formation of the luminous beam which strikes the photo-receiver (5).

With reference to Fig.3, it can be observed that the two photo-emitters (A and B) are fed by means of an electronic circuit which permits the variation in an inversely proportional manner of the intensity of the currents sent to the two luminous sources (A and B); in the finished article in order for this variation to be effected, a common rheostat (7) has been provided. Upon variation of the two feed currents, countless intermediate situations can be obtained, starting from the condition in which the photo-emitter (A) is on and the photo-emitter (B) is off, up to the opposite condition.

If, for example, we suppose that the two sources are fed by currents of equal intensity, then for the photo-detector it will be like receiving radiation from an apparent luminous source (C), which has its maximum intensity at an intermediate point between the two sources; that is to say, as if in place of the two sources, there were only one virtual photo-emitter of the same power as the apparent luminous source.

That being the case, the description now follows of how the pressure switch according to the invention can be calibrated at two different pressure values, which can be switch controlled.

For one of the two pressure values, by means of the adjusting screw, the resisting force of the antagonistic spring is adjusted in such a way that the relay trips when the optic barrier, displaced by the membrane subjected to the value of the differential pressure of calibration, stops intercepting the radiations emitted by one ( in the finished article the photo-emitter (A )), of the two photo-emitters, which in this first calibration function on selection, in the sense that only one of the two luminous sources is on, while the other (photo-emitter (B) ) is off.

The second calibration value is effected by subjecting the membrane to a new differential value pressure and by varying, by means of the rheostat (7), the feed currents of the two luminous sources (A and B) until the relay trips.

In other words, the calibration of the pressure switch at two different pressure values takes place through the action of the manufacturer concerned, by blocking in the correct position the adjusting screw of the antagonistic spring (2), for one of the two values and by the adjustment of the rheostat (7) for the other of the two calibration values.

The pressure switch is fitted with a switching device which determines the functioning of the pressure switch at one or the other of the two calibration values, on receipt of an external electric signal.

Said switching device consists of a relay (8), positioned as illustrated in Fig.3, in a preferred form of embodiment.

The pressure switch is generally installed in such a way that, in the presence of said electric signal, the electric feed of the receiver-transmitter optic group takes place so that only the photo-emitter (A) is on, while the photo-emitter (B) is off; as a consequence, the relay will trip at the calibration value pre-established with the adjustment of the antagonistic spring's force (2).

When the external electric signal is interrupted, the relay (8) trips, and the feed of the receiver-transmitter optic group changes in such a way that the two photo-emitters ( A and B ), are traversed by two currents of a pre-established value ( the function of the adjustment of the rheostat (7) ),to which an intervention of the pressure switch for the second calibration value correspond.

Attention is drawn to the fact that by making provision for the use of more rheostats and an electronic switching device, on the pressure switch according to the invention, it is simple to set more than two different calibration values, which can on each separate occasion be selected, simply by sending an electric signal to the pressure switch which activates one partiular rheostat, rather than another, therefore, the relay will trip at a calibration value corresponding to the rheostat working at the time.

At this point, it should be noted that in the pressure switch according to the invention, as a result of its particular constructional and working characteristics, it is also possible to vary the calibration value in proportion to a control signal.

In other words, instead of calibrating the pressure switch by means of a rheostat (7), provision can be made to install the uncalibrated pressure switch and to interlock it to an external control signal, which merely varies the feed currents of the two photo-emitters, so that the calibration of the pressure switch changes continually according to the variation of the external control signal.

It is easy to understand how by developing the inventive concept at reference in this patent application, differential pressure switches can be created, according to the techniques of design and construction known to experts in the field, which make use of more than two photo-emitters cooperating with more than one photo-receiver, on condition that provision be made for adequate electronic circuits which permit variation of the feed currents to the photo-emitters, in such a way as to create, in the "eyes" of the photo-detector system, apparent luminous sources the maximum intensity of which takes place at points comprised within the space delimited by the actual existing photo-emitters.

## Claims

1. Differential electronic pressure switch of the type comprising an elastic membrane (3), which separates two adjacent airtight chambers, in one of which there is a receiver-transmitter group with luminous radiation intercepted by an optic barrier (1), which is subjected to the thrust of an adjustable antagonistic spring (2), fixed to the aforementioned membrane in such a way that the displacement of the latter brings about translations of said barrier (1); said pressure switch being characterised by the fact that said receiver-transmitter group is made up of at least one photo-detector (5) linked with a miniaturised electronic circuit (6) for the detection of the amount of radiation received and positioned in opposition to at least two closely arranged photo-emitters (A and B), the feed currents of which can be simultaneously varied in an inversely proportional manner to each other by means of adequate control and adjustment means, said pressure switch being fitted with a switching device which, on receiving an external electric signal or not, is adapted to activate the functioning of said receiver-transmitter optic group in one or the other of two different pre-established working conditions, the first of which is determined by resisting force of the antagonist spring (2) and second of which is determined by the feed current of the photo-emitters (A and B); said receiver-transmitter optic group being arranged with respect to the optic barrier (1) such that the gradual detection of radiation from one photo-emitter, during retreat of the barrier, should start before the complete detection of radiation from the preceding photo-emitter.

2. Differential electronic pressure switch, according to claim 1), characterised by the fact that variation of the feed currents of the photo-emitters is effected by means of a rheostat (7), to which access can be gained from the outside of the pressure switch.

3. Differential electronic pressure switch, according to claim 1), characterised by the fact that the optic barrier (1) consists of a cylindrical opaque body, ending in a conical tip (1a), which intercepts, in its resting position, the luminous radiation emitted by the photo-emitters, which are positioned together with the photo-receiver, on a plane not passing through the longitudinal axis X-X of the conical tip (1a).

4. Differential electronic pressure switch, according to claim 1), characterised by the fact that the luminous radiation emitted by the photo-emitters are preferably infra-red.

5. Differential electronic pressure switch, according to claim 1), characterised by the fact that the switching device consists of a relay (8), adequately connected in the feed circuit of the photo-emitters.

## Patentansprüche

1. Elektronischer Differential-Druckwächter, ausgerüstet mit einer elastischen Membran (3) zur Trennung der beiden aneinander angrenzenden, hermetischen Kammern; in einer der Kammern befindet sich eine Sende- und Empfangseinheit für Lichtstrahlen, die von einer Lichtschranke (1) aufgefangen werden, die unter dem Zug einer einstellbaren, gegenwirkenden Feder (2) steht und an der besagten Membran so befestigt ist, daß ein Verschieben der Membran eine Translationsbewegung der Lichtschranke (1) bewirkt; Druckwächter, dadurch gekennzeichnet, daß die besagte Sende- und Empfangseinheit aus mindestens einem Fotozellenabgriff (5) besteht, der mit einem elektronischen Miniaturschaltkreis (6) zur Erfassung der empfangenen Lichtstrahlen verbunden und mindestens zwei eng beieinanderliegenden Fotosendem (A und B) gegenübergestellt ist, deren Versorgungsstrom mittels entsprechender Steuer- und Regeleinrichtungen gleichzeitig umgekehrt proportional geändert werden kann, da der besagte Druckwächter mit einer Umschaltvorrichtung ausgestattet ist, die bei Eintreffen oder Nichteintreffen eines elektrischen Signals von außen in der Lage ist, den Betrieb der besagten Lichtstrahlen-Sende- und Empfangseinheit in einer von zwei zuvor festgelegten Betriebsbedingungen zu aktivieren, wobei erstere vom Widerstand der entgegenwirkenden Feder (2) und letztere vom Versorgungsstrom der Fotosender (A und B) bestimmt wird, da die besagte Lichtstrahlen-Sende- und Empfangseinheit so zur Lichtschranke (1) positioniert ist, daß die stufenweise Erfassung der Lichtstrahlen eines Fotosenders während des Zurückfahrens der Lichtschranke einsetzt, bevor die Erfassung der Lichtstrahlen des unmittelbar zuvor tätigen Fotosenders beendet ist.

2. Elektronischer Differential-Druckwächter gemäß Anspruch 1), dadurch gekennzeichnet, daß die Änderungen des Stromes zur Versorgung der Fotosender mit Hilfe eines von außen, über den Druckwächter zugänglichen Regelwiderstandes (7) erfolgen.

3. Elektronischer Differential-Druckwächter gemäß Anspruch 1), dadurch gekennzeichnet, daß die Lichtschranke (1) aus einem lichtundurchlässigen Zylinder mit konischer Spitze (1a) besteht, die in Ruheposition die Lichtstrahlen auffängt, die von den Fotosendern ausgesandt werden, welche zusammen mit dem Lichtempfänger auf einer die Längsachse X-X der konischen Spitze (1a) nicht schneidenden Ebene angeordnet sind.

4. Elektronischer Differential-Druckwächter gemäß Anspruch 1), dadurch gekennzeichnet, daß die von den Fotosendern ausgesandten Lichtstrahlen vorzugsweise im Infrarotbereich liegen.

5. Elektronischer Differential-Druckwächter gemäß Anspruch 1), dadurch gekennzeichnet, daß die Umschaltvorrichtung aus einem Relais (8) besteht, das in angemessenen Weise in den Versorgungsstromkreis der Fotosender eingefügt ist.

## Revendications

1. Pressostat différentiel électronique, du type comprenant une membrane élastique (3) qui sépare deux chambres étanches adjacentes, dans l'une desquelles est situé un groupe émetteur-récepteur à radiations lumineuses interceptées par une barrière optique (1) qui résulte soumise à la poussée d'un ressort antagoniste (2), réglable, et qui résulte fixé à la susdite membrane de manière à ce que le déplacement de celle-ci détermine des translations de ladite barrière (1); pressostat caractérisé en ce que le susdit groupe émetteur-récepteur est formé d'au moins un photocapteur (5) connecté à un circuit électronique miniaturisé (6) pour la détection de la quantité de radiations reçues et opposé à au moins deux proches photoémetteurs (A et B) dont les courants d'alimentation peuvent simultanément être variés de manière inversement proportionnelle par le biais de commandes et de réglages prévus à cet effet, ledit pressostat étant doté d'un dispositif de commutation qui, lors de l'arrivée ou non d'un signal électrique externe, est apte à enclencher le fonctionnement du ledit groupe optique émetteur-récepteur dans l'une ou l'autre des deux différentes conditions de fonctionnement préfixées, la première desquelles étant déterminée par la force résistante du ressort antagoniste (2) et la seconde desquelles étant déterminée par le courant d'alimentation des photoémetteurs (A et B), ledit groupe optique émetteur-récepteur étant disposé, par rapport à la barrière optique (1), de manière que la détection graduelle de radiations de la part d'un photoémetteur, pendant le recul de la barrière, commence avant que ne soit terminée la complète détection des radiations de la part du photoémetteur précédent.

2. Pressostat différentiel électronique, selon la revendication 1), caractérisé en ce que la variation des courants d'alimentation des photoémetteurs s'effectue par le biais d'un rhéostat (7) accessible depuis l'externe du pressostat.

3. Pressostat différentiel électronique, selon la revendication 1), caractérisé en ce que la barrière optique (1) consiste en un corps cylindrique, opaque à la lumière, se terminant par une pointe conique (1a) qui intercepte, en position de repos, les radiations lumineuses émises par les photoémetteurs qui eux sont disposés, avec le photocapteur, sur un plan ne passant pas à travers l'axe longitudinal X-X de la pointe conique (1a).

4. Pressostat différentiel électronique, selon la revendication 1), caractérisé en ce que les radiations lumineuses émises par les photoémetteurs sont préférablement à l'infrarouge.

5. Pressostat différentiel électronique, selon la revendication 1), caractérisé en ce que le dispositif de commutation consiste en un relais (8) introduit de manière opportune sur le circuit d'alimentation des photoémetteurs.
